# EUROPEAN PATENT APPLICATION

(11) **EP 4 112 142 A1**
(43) Date of publication of application: **04.01.2023**
(21) Application number: 21196810.2
(22) Date of filing: 15.09.2021
(51) Int. Cl.: A63F 13/35, A63F 13/45, A63F 13/85, A61H 1/00, A61H 19/00

(54) **METHOD, DEVICE, AND SYSTEM FOR THE INTERACTIVE LIVE STREAMING OF AUDIO, VIDEO, TACTILE, AND/OR TEXTUAL CONTENT OF 2 OR MORE MODELS ENGAGED A BATTLE CHALLENGE STREAMED INTERACTIVELY TO A PLURALITY OF MEMBERS**

(30) Priority: 30.06.2021 WO PCT/US2021/173895
(71) Applicant: Mitchell, Frederick, 1855 Luxembourg (LU)
(72) Inventor: Kaszaly, Kolos, L-1855 Luxembourg (LU)

(57) **Abstract**

The present disclosure discloses a method and system for composing two or more live video, audio, and text streaming sources from two or more models, for transmission and interaction to and from a plurality of members, allowing for, but not limited to, live real-time video, audio, and texting interaction among the models and members via a distributed Internet system and cloud servers, allowing for an interactive challenge or "battle" between or among the models.

A reward structure by which the viewing members can reward the models in a live streaming real-time manner to permit determination of a winning model.

Optionally, remote-controlled adult toys may also be supported in the battle challenge, controlled and used by both the members and models.

## Description

### FIELD OF THE INVENTION

Live streaming models in a challenge situation together with the members, implemented over multimedia terminals and back-end servers, to allow interaction, with possibly a tailored "point-of-view" for the respective streams.

Historically, we do have video conferencing, which has a completely different focus. In that regard, there are no "models" and "members" as such, as specified in the context of this patent. In that case, the idea is to remotely conference a group of people in one or more remote settings, normally for business purposes. There may be an entire physical conference room of individuals remotely collaborating with one or more physical conference rooms, or individuals, or both. Typically then numbers participating relatively small, and there is only one session.

This invention is not geared for your typical business video conferencing use case, but for model-driven entertainment and engagement with the members. The number of individual participants in the ensuing interactive live stream session, which entails video, audio, text live streaming, and possibly remote-controlled adult toys, can be in the hundreds or more.

### BACKGROUND OF THE INVENTION

It is an ongoing challenge to find novel ways to engage the users of interactive live streaming, to enhance their synergistic experience, and to do so in a natural way, so that the models and the members experience the technology in a transparent way at scale, enhanced with the low-latency responsiveness.

Video conferencing live streaming technologies and approaches have been around for some time now, but the focus of that technology is for just a small number of remote connections to allow individuals with their own multimedia terminals, and people in a meeting format sharing a multimedia terminal to interact with each other. Typically one may only see 2 multimedia terminals, but can go as high as 5 or more. At larger numbers of remote connections, however, it becomes more difficult for the users to interact in a natural manner.

As such, the video conferencing use case is not ideal for an entertainment system which allows a plurality of members to interact with two or more models.

The goal of a models is to engage in a "battle challenge" for the rewards and attention from the members, engaging in creative challenges. This challenge can take on any form as the models see fit, that can be conveyed through their multimedia terminals to the multimedia terminals of the members. The reward may be in the form of tokenized currency, but may take on other forms as well.

Customer interaction entails, but is not limited to, live textual and emoji interactions with the audio and video presentations of the live models. But audio and video streams from the members could potentially be allowed. Remote-controlled adult toys is optional, but could play a roll with activation by the members of the models' adult toys, or by the models of the members' adult toys.

This invention provide the solution on how to make this possible.

### OBJECTS OF THE INVENTION

In order to promote the deeper engagement of the members with the models in an interactive manner, new levels and techniques of engagement are required. And so, this systems allows 2 or more models to compete amongst themselves for some type of response, reward, or action from the members. The model with the greatest set of rewards or responses is declared the "winner", and may or may not receive further inducements for being a winner.

It is also possible for a tie situation to develop. Various rules may be enacted to resolve a tie, or the tie may be left in that state.

There are many technical challenges to overcome, including the dynamic compositions of the live streams of two or more models in a manner that promotes interactions of the members with the models. The plurality of live members can be quite large, on the order of hundreds, or more.

This invention provides for the proper setup and configuration of the back-end servers, upon which shall be executed the appropriate business logic in the form of software, database entries, and/or configuration files to enable the "battle" or challenge among 2 or more models with the participating audience of members.

### SUMMARY OF THE INVENTION

Streaming technology is used to promote challenging engagements on the part of the models and members, allowing them by means of a distributed server stack for 2 or more models to compete with each other for the tokenized currency granted from members via their multimedia termninals, involving video, audio, and optionally remote-controlled adult toys.

The model who receives the largest number of tokenized currency is declared the "winner" by the business logic as implemented on a server stack. Said business logic may also have other declarations as the outcome to said battle challenge, such as "tie" or "no contest" or other declarations.

In this patent, "model" is the agent that is creating live audio, video, and textual content for an audience of members. "Member" is the agent that assumes a more passive role as consumer of the content, though with some ability to interact with the models either by video, audio, or textual means, or some combination. "Battle" denotes, but is not limited to, a game, challenge, or strategy that the involved models have chosen to engage the members with. "Battle logic" denotes the set of business rules as implemented on the server machines to officiate the provisioning of, but not limited to, the audio, video, text streams, and possibly adult toys, and their composition on computing devices and distribution to the models and members involved for the duration of the battle, including the time of the duration of the battle itself, if such a time limit is imposed.

### BRIEF DESCRIPTION OF THE DRAWINGS

For a more complete understanding of the invention, reference is made to the following description and accompanying drawings, in which:

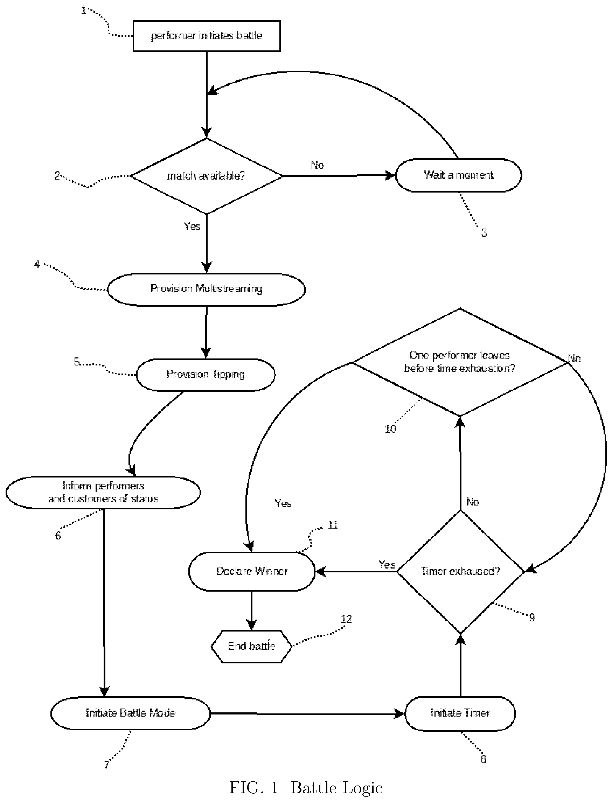

FIG. 1 Business logic showing the details of the battle logic functionality; and
FIG. 2 Architecture of the Battle System based on Multi-streaming, depic-iting the general data flow.

### DETAILED DESCRIPTION OF THE PREFERRED EMBODIMENTS

A "model" is a person generating, but not limited to, audio, video, and textual content using a multimedia terminal, generally, but not limited to, a computer equipped with an electronic camera and microphone, or a mobile device comprising the same. Remote-controlled adult toys may also optionally be used by said models and members, and said toys would be connected to said multimedia terminals of the models and members by way of Bluetooth, WiFi, USB, or some other wired or wireless means.

Two or more models are normally involved. Said models are assumed to be equipped with their own multimedia terminals, which could be, but is not limited to, a laptop or desktop computer, or a mobile device.

A "battle challenge" is a contest or challenge that one model initiates, whereupon a matching model is chosen by the server back-end [1] according to chosen and specified business rules as befits the challenge. Conversely, a model may potentially choose a specific person to engage in battle with.

A model initiates battle challenge mode [1]. The back-end server then makes a match with another model [2]. If a match is not found right away, then we pause and check later [3]. The "pause" may be implemented in many different ways by the back-end servers, as well as possible, but not required, notifications of the same. The pause could be any time span from milliseconds to minutes.

The members are the viewers of the audio and video content. The server may grant them the ability to interact with the models using, but is not limited to, textual, audio, or video means.

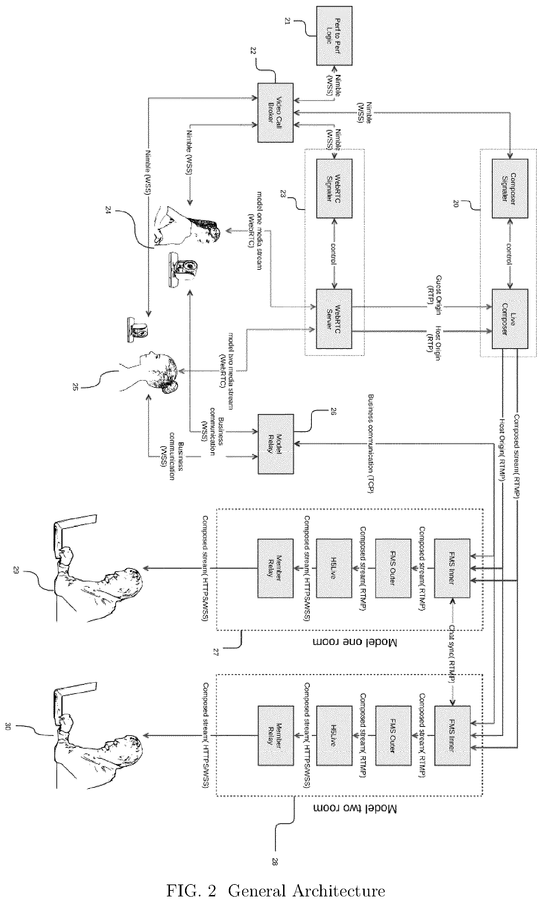

The live streams from the multimedia terminals of the models must be received and composed (see FIG. 2). This is accomplished by compositional streaming servers that can either compose the streams within the servers themselves, or provide properly formatted streams that shall be composed on the multimedia terminals of the members. The live streams must be properly synchronised, as well as the live responses from the members. In general, no more than one second of latency may be tolerated, or the sense of the real-time aspect of the live streaming may be lost. The servers responsible for the composition and delivery of the composed live streams to a plurality of members must be performant enough to deliver.

This can be achieved by creating a fan-out architecture to distribute the live streams post composition.

There is business logic involved, executed on the server machines, to do the matching [2]. The matching criteria can be, for example, but not limited to, the relative quality of the models, their genders, etc.

The match is made from a selection of models that have initiated the match [1] [2]. Normally 2 are selected, but battles can involve 3 or more.

The channels for multi-streaming must be provisioned [ 4 ]. Next, the tipping (tokenized currency) mechanisms must also be provisioned [ 5 ].

The models and members must then be informed of the newly provisioned status [6], whereupon the battle challenge mode is initiated [7]. At that exact time, the timer is started [8].

We now check the status of the timer [9]. If the timer is exhausted, then we declare the winner or some other appropriate declaration [ 11 ]. If the time is not exhausted yet, we check to see if the models are still streaming [10]. If one performer quits before time exhaustion, then we automatically declare the remaining model the "winner", or perhaps some other designation, such as "no contest", etc. [11].

Once a "winner" is declared and all the models and members that are participating receive the appropriate notifications, and the provisioning for said battle challenge is torn down [12], since now the battle challenge has been concluded.

In the RTMP Stack, the details of the model's media terminal is fetched from the SwitchBoard server (see FIG. 2). The stream composition is then provisioned. If there's a failure, such as one of the models going offline, then the logic regarding the failure, including the proper and orderly tear-down of the partially-configured resources commences. Otherwise, stream sharing of the models' streams commence.

Live Logic Service (and Publish, Sharing) - The appropriate logic must be in place to handle publishing and sharing of the streaming resources, as well as the setup and tear-down of the same (see FIG. 2).

The general architectures compromises: A compositor [20] which is responsible for compositing the streams of the models. This may either present separate streams from the models where the final composition is done on the multimedia terminal of the members, or composition is performed on the server, resulting in one composite stream which will then be rendered on the multimedia terminals of the members.

Model to Model logic [21] is business logic executed on server machines to enable a model to contact other models, so that they can coordinate their battle plans, etc.

Video call broker [22] - Main model's multimedia terminal application initiates a call to a invited performer via a new instance of the video call broker. This works in concert with the Model to Model logic [21].

WebRTC Server [23] receives the live streaming from the models in the form of the WebRTC protocol. It then forwards the streams to the Live Composer inside of [20].

The models [24] and [25] are the producers of the audio and video content, where their streams are generated by their respective media terminals, as well as being able to directly communicate with each other via [21] and [22].

The Model Relay [26] deals with allowing business logic similar to [21 ] and [ ] to be conducted for FMS.

The Model Rooms [27] and [28] are where the interactivity between models and members are coordinated, as the model and her associated members are conceptually in a "room", as such. There will be many rooms instantiated in the server farm, each officiating a video conference.

The Members and their terminal clients [29] and [30] sending their live streams to and receiving the live streams from the models.

## Claims

1. A method comprising the composition of the interactive live streams of 2 or more models derived from their multimedia terminals distributed to a plurality of multimedia terminals, both the terminals of the members and the terminals of the models. The models engage in an exchange, game, or competition (hereafter denoted as "battle challenge" or just "battle") for tokenized currency from the members. The business logic for this game implemented on a server stack. The battle challenge may involve remote-controlled adult toys used either by the members, models, or both. Virtual Reality devices may also be employed by the members, as well as Virtual Reality-capable cameras on a part of the models, to create a more immersive experience.

2. The method of claim 1 further comprising composition of said live streams from the models' multimedia terminals for visual composition and rendering on their respective multimedia terminals permitting them to view each other simultaneously, to facilitate their participation in said battle challenge.

3. The method of claim 2 where said model may selectively enable and disable elements of the visual composition of the other said models on said multimedia terminal during said battle challenge.

4. The method of claim 2 where said model may selectively enable and disable elements of the audio composition of the other said models on said multimedia terminal during said battle challenge.

5. The method of claim 1 where the business logic supporting said battle challenge is implemented on computing machines comprising one or more computational processing units, with sufficient random-access memory as is needed by the business logic. Said business logic supports the details of the implementations of said battle challenge.

6. The method of claim 2 where said live stream composition is performed on said multimedia terminals of said models and members for said battle challenge.

7. The method of claim 1 further comprising composition of audio streams from said models' multimedia terminals for audio composition and rendering on their respective multimedia terminals, permitting them to hear each other simultaneously during said battle challenge.

8. The method of claim 1 further comprising said server stack of sufficient architecture to permit the scaling of the stack to enable servicing any arbitrary number of said members and models for any arbitrary number of sessions facilitating said battle challenges.

9. The method of claim 5 where said model may invite another model though said model's multimedia terminal to participate in said battle challenge.

10. The method of claim 5 where the server stack selects another member for said battle challenge, based on configured selection criteria comprising the business logic.

11. The method of claim 5 where said model invites members to participate in said battle challenge through a multimedia terminal.

12. The method of claim 5 where said optional electronic remote-controlled adult toys of said models are controllable by said members, with or without said tokenized currency tipping, during said battle challenge.

13. The method of claim 5 where said electronic remote-controlled adult toys of said members are controllable by said models, either individually or as a group.

14. The method of claim 5 where said business logic by way of said server stack may selectively control said optional remote-controlled adult toys of said members and/or models.

15. The method of claim 5 where said business logic as implemented on said server stack imposes a time limit to said battle challenge.

16. The method of claim 5 where said business logic as implemented in said server stack allows said battle challenge to continue without time restriction, only ending when one of the said models ends the battle, at which point said business logic determines the "winner".

17. The method of claim 16 where there is a deceleration of a "tie" or "no contest" in said battle challenge, according to said business logic. Other declarations are possible.

18. The method of claim 1 where said remote-controlled adult toys comprising control signals over USB.

19. The method of claim 1 where said remote-controlled adult toys comprising control signals over Bluetooth.

20. The method of claim 1 where said remote-controlled adult toys comprising control signals via an infrared link.

21. The method of claim 1 where said Virtual Reality devices and said remote-controlled adult toys are both used during the battle by some or all of said members and models.
